# EUROPÄISCHE PATENTSCHRIFT

(11) **EP 0 927 486 B1**
(45) Veröffentlichungstag und Bekanntmachung des Hinweises auf die Patenterteilung: **05.09.2001**
(21) Anmeldenummer: 98925383.6
(22) Anmeldetag: 24.06.1998
(51) Int. Cl.: H04M 3/56

(54) **VERFAHREN ZUM BETRIEB EINES NETZWERKES MIT MITEINANDER VERBINDBAREN ENDGERÄTEN**
METHOD FOR OPERATING A NETWORK WITH INTERCONNECTED TERMINALS
PROCEDE PERMETTANT DE FAIRE FONCTIONNER UN RESEAU COMPORTANT PLUSIEURS TERMINAUX POUVANT ETRE CONNECTES LES UNS AVEC LES AUTRES

(30) Priorität: 30.06.1997 CH 156997
(43) Veröffentlichungstag der Anmeldung: 07.07.1999
(73) Patentinhaber: Siemens Schweiz AG, 8047 Zürich (CH)
(72) Erfinder: BÜHLMANN, Adrian, CH-5004 Aarau (CH)
(74) Vertreter: Zedlitz, Peter, Dipl.-Inf.
(86) Internationale Anmeldenummer: CH9800277
(87) Internationale Veröffentlichungsnummer: WO9901977

(56) Entgegenhaltungen:
- EP-A- 0 604 046
- EP-A- 0 604 053
- EP-A- 0 664 636
- US-A- 5 483 588
- E. HASZTO ET AL: "Alliance-Teleconferencing Services Boost Business Efficiency" AT&T TECHNOLOGY, Bd. 3, Nr. 1, 1988, SHORT HILLS (US), Seiten 22-31, XP002057239
- H. KOLREP ET AL: "Mehrpunkt-Videokonferenzen per Selbstwahl - Ergebnisse einer Nutzeruntersuchung" NTZ NACHRICHTEN TECHNISCHE ZEITSCHRIFT, Bd. 43, Nr. 7, Juli 1990, BERLIN )DE), Seiten 520-525, XP000160025

## Beschreibung

Die vorliegende Erfindung betrifft ein Verfahren nach dem Oberbegriff des Patentanspruchs 1 bzw. des Patentanspruchs 2.

Es gibt Femmeldevermittlungsanlagen, in denen andere hierzu berechtigte Teilnehmer in eine zwischen zwei Teilnehmern bestehende Verbindung eintreten und dabei mithören und am Gespräch teilnehmen können.

In US 5.483.588 ist ein Telefonkonferenzsystem beschrieben, das einem Konferenzteilnehmer erlaubt mittels sogenannter Tontastenwahl (z.B. DTMF) in andere Konferenzen ein- und wieder austreten zu können. Der Konferenzeintritt und -austritt kann den übrigen Konferenzteilnehmem akustisch, d.h. durch eine Ansage des betreffenden und gespeicherten Namens angezeigt werden. Das in US 5.483.588 angegebene Telefonkonferenzsystem erlaubt lediglich einen Konferenzeintritt bzw. Konferenzaustritt eines Teilnehmers selber, gezielt können keine an einer Konferenz beteiligte Teilnehmer durch eine Unterbrechung von Hör- und Sprechstromkreis momentan von der betreffenden Konferenz ausgeschlossen werden.

Das Leistungsmerkmal Konferenz ist insbesondere in sogenannten Händleranlagen oder in Chefsekretäranlagen erwünscht. Händleranlagen werden vor allem in Banken u.a. für den Devisenhandel eingesetzt. In solchen Einsatzfällen besteht aus Diskretionsgründen die zusätzliche Anforderung, dass vorübergehend nur zwei der an der Verbindung beteiligten Teilnehmer miteinander sprechen wollen und deshalb alle anderen an der Verbindung beteiligten Teilnehmer während dieser Zeit von der Verbindung getrennt und dann zu einem späteren Zeitpunkt wieder angeschaltet werden müssen. Die Trennung kann von einem beliebigen an der jeweiligen Verbindung beteiligten Teilnehmer veranlasst werden. Die von der Verbindung getrennten Teilnehmer werden in einen Wartezustand versetzt, um dann später durch einen der beiden noch an der Verbindung beteiligten Teilnehmer wieder in die Verbindung aufgenommen werden zu können. Bei der Trennung wird die Verbindung zum Endgerät der getrennten Teilnehmer deshalb nicht definitiv aufgehoben, sondern es wird nur der Hör- und Sprechstromkreis von der Verbindung abgeschaltet.

Der vorliegenden Erfindung liegt die Aufgaben zugrunde, ein Verfahren anzugeben, das bei der Realisierung des oben beschriebenen Leistungsmerkmals eine zuverlässige und eindeutige Trennung von an einer Verbindung beteiligten Teilnehmen gewährleistet.

Diese Aufgabe wird durch die im Patentanspruchs 1 bzw. Patentanspruch 2 angegebenen Massnahmen gelöst. Vorteilhafte Ausgestaltungen der Erfindung sind in weiteren Ansprüchen angegeben.

Das erfindungsgemässe Verfahren ermöglicht in einem Netzwerk mit Endgeräten, die über Knoten miteinander verbindbar sind, aus einer Mehrzahl momentan miteinander verbundener und ein Verbindungsnetz bildender Endgeräte auf Anforderung eines beliebigen Endgerätes exklusiv zwei bestimmte Endgeräte in der Verbindung zu belassen und die weiteren Endgeräte vorübergehend vom Verbindungsnetz zu trennen. Hierzu ist keine übergeordnete diesen Vorgang steuemde Stelle im Netzwerk nötig, so dass im Netzwerk ausnahmslos gleichartige Knoten eingesetzt werden können. Das Netzwerk kann somit ohne weiteres mit weiteren gleichen Knoten ergänzt werden.

Die Erfindung wird nachfolgend anhand einer Zeichnung beispielsweise näher erläutert. Dabei zeigt:
Fig. 1 ein erstes durch miteinander verbundene Endgeräte gebildetes Verbindungsnetz
Fig. 2 ein zweites durch miteinander verbundene Endgeräte gebildetes Verbindungsnetz
Fig. 3 ein Meldungsdiagramm zum Ablauf des Verfahrens

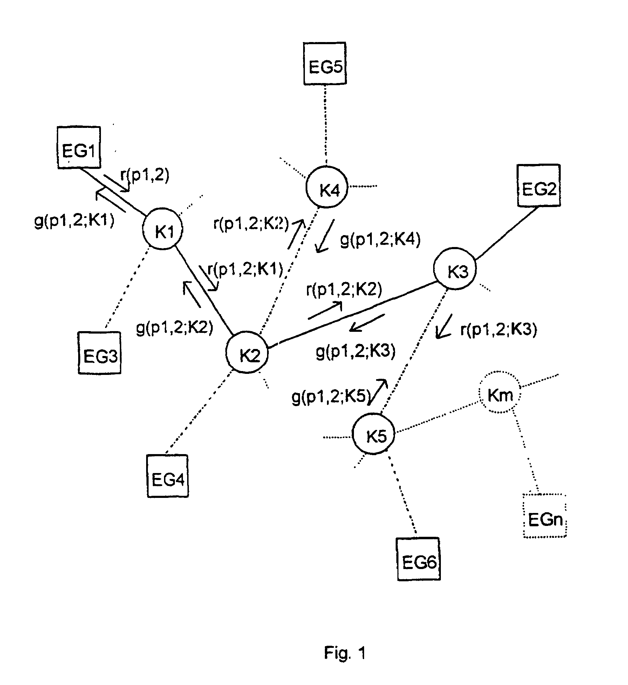

Fig. 1 zeigt ein Netzwerk, z.B. ein Fernmeldenetz, mit Endgeräten EG1 ... EGn, die über Vermittlungsknoten K1 ... Km - nachfolgend auch kurz Knoten genannt - miteinander Verbindungen aufbauen können. An die Knoten K1, ..., Km können sowohl weitere Knoten als auch direkt ein oder mehrere Endgeräte angeschlossen sein. Unter Endgeräte werden hier z.B. Femsprechapparate verstanden. Die Übertragung der zum Auf- und Abbau einer Verbindung notwendigen Informationen erfolgt jeweils über einen Signalisierungskanal, wogegen die Nutzinformationen über einen bidirektionalen Nutzsignalkanal übertragen werden. Zur Erläuterung der Erfindung sei angenommen, zwischen dem Endgerät EG1 und dem Endgerät EG2 bestehe eine Gesprächsverbindung. Diese Verbindung führt über die Knoten K1, K2 und K3 des Fernmeldenetzes. Femer wird angenommen, die weiteren Endgeräte EG3 bis EG6 seien in diese Verbindung eingetreten und können so das Gespräch zwischen den Teilnehmem der Endgeräte EG1 und EG2 mithören und auch mitsprechen. Die Knoten K1 bis K5 und die Endgeräte EG1 bis EG6 bilden somit ein Verbindungsnetz, über das die Teilnehmer der Endgeräte EG1 bis EG6 miteinander kommunizieren können. In den Knoten des Verbindungsnetzes wird jeweils eine Konferenz gebildet, indem aus verschiedenen Richtungen ankommende Nutzsignale addiert, das eigene Nutzsignal subtrahiert und das Ergebnis wieder in die verschiedenen Richtungen abgegeben wird. Jeder am Verbindungsnetz beteiligte Teilnehmer hört somit die anderen am Verbindungsnetz beteiligten Teilnehmer, aber sich selbst nicht.

Wenn eines der Endgeräte EG3 bis EG 6 in die Verbindung zwischen den Endgeräten EG1 und EG2 eintreten will, muss der betreffende Teilnehmer eine Taste "Eintreten" an seinem Endgerät betätigen, worauf der zugehörige Knoten über das Netzwerk die Verbindung zwischen dem Endgerät und der bestehenden Verbindung zwischen den Endgeräten EG1 und EG2 nach dem erwähnten Prinzip der Konferenzbildung herstellt. Dabei kann vorgesehen werden, dass den beiden Endgeräten EG1 und EG2 signalisiert wird, wenn ein weiteres Endgerät in ihre Verbindung eingetreten ist.

Wünscht nun ein Teilnehmer der Endgeräte EG1 bis EG6 aus Diskretionsgründen sich vorübergehend mit einem der anderen Teilnehmer allein zu unterhalten, müssen die übrigen an der Verbindung beteiligten Endgeräte für eine gewünschte Zeitspanne vom Mithören/Mitsprechen ausgeschlossen werden. Beispielsweise will der Teilnehmer am Endgerät EG1, der schon ursprünglich allein mit dem Teilnehmer des Endgerätes EG2 verbunden war, vorübergehend wiederum nur mit dem Teilnehmer am Endgerät EG2 sprechen. Für diese Exklusivverbindung zwischen den Endgeräten EG1 und EG2 besteht deshalb die Anforderung, die Endgeräte EG3 bis EG6 in einfacher Weise so von der Verbindung zu trennen, dass sie später nach Wegfall des Diskretionsbedürfnisses ohne weiteres wieder zugeschaltet werden konnen. Die vorübergehende Trennung der Endgerate EG3 bis EG6 wird vom entsprechend berechtigten Endgerät EG1 eingeleitet, indem der Teilnehmer an seinem Endgerät EG1 die Funktion "Privacy" aktiviert und zusätzlich angibt, mit welchem Endgerät er exklusiv sprechen will. Demzufolge wird vom Endgerät EG1 eine dieser Funktion entsprechende Meldung zum zugeordneten Knoten K1 geschickt.

Diese Meldung kann die Form r(p 1,2) haben. "r" steht für die Art der Meldung (Anforderung), "p" für die Art der Anforderung (Privacy), "1" für die Identifikation der anfordemden Stelle im Netzwerk (Endgerät EG1) und "2" für die Identifikation derjenigen Stelle (Endgerät EG2) des Netzwerkes, die in der Verbindung verbleiben soll.

Der Knoten K1 - wie auch alle anderen Knoten des Netzwerkes, die eine Meldung erhalten - merkt sich, von wo er die Meldung erhalten hat und schickt eine Meldung r(p 1,2;K1) an den benachbarten Knoten K2. Diese Meldung ist mit "K1" erganzt, um den anfordernden Knoten K1 zu identifizieren Der Knoten K2 merkt sich, von wo die Meldung eingetroffen ist und schickt je eine Meldung r(p 1,2;K2) an die benachbarten Knoten K3 und K4. In gleicher Weise schickt schliesslich der Knoten K3 eine Meldung r(p 1,2;K3) an den Knoten K5, Somit haben alle Knoten K1 bis K5, die an dem durch die Verbindung zwischen den Endgeräten EG1 und EG2 sowie durch die in diese Verbindung eingetretenen Endgeräte EG3 ... EG6 gebildeten Verbindungsnetz beteiligt sind, die vom Endgerät EG1 ausgehende Anforderung "Privacy" erhalten. Dieses Verbindungsnetz ist zyklusfrei und umfasst die in Fig. 1 mit durchgezogenen sowie mit strichpunktierten Linien dargestellten Verbindungen. In Abweichung von dem in Fig. 1 gezeigten Verbindungsnetz ist auch ein Verbindungsnetz denkbar, in welchem weitere Knoten vorhanden sind, die keine am Verbindungsnetz beteiligte Endgerate aufweisen, d.h. Knoten, die als Transitknoten wirken.

Jeder Knoten, der eine Anforderung erhalten hat und das betreffende an ihm angeschlossene Endgerät trennen kann, schickt an den Knoten, von dem er die Anforderung erhalten hat, eine entsprechende Bestätigung zurück. Die Rücksendung beginnt jeweils bei den Endknoten des Verbindungsnetzes. So schickt der Knoten K5 eine Meldung g(p 1,2;K5) an den Knoten K3 zurück, von dem er zuvor die Anforderung r(p 1.2;K3) erhalten hat.

In der Meldung g(p 1,2;K5) bedeutet "g" die Art der Meldung (Bestätigung), "p" die Art der bestätigten Anforderung (Pnvacy), "1" die Identifikation der anfordemden Stelle (Endgerät EG1), "2" die identifikation derjenigen Stelle (Endgerät EG2), die in der Verbindung verbleiben soll und "K5" den Knoten, von dem die Bestätigung stammt.

Der Knoten K3, der zuvor die Meldung r(p 1,2 K3) an den Knoten K5 geschickt hat und demzufolge auf eine Antwort vom Knoten K5 wartet, registriert den Eingang der Meldung g(p 1,2;K5) vom Knoten K5. Jeder Knoten im Verbindungsnetz, der eine Anforderung an einen anderen Knoten geschickt hat, überwacht, ob von diesem Knoten innerhalb einer vorgegebenen Zeitspanne eine Antwort (Bestätigung) eintrifft. Dies kann mit einem Zeitglied geschehen, das jeweils beim Abschicken einer Meldung im Knoten gestartet wird.

Wenn innerhalb der Zeitspanne die in einem Knoten erwartete Bestätigung nicht eintrifft, bleibt der Versuch des Endgerätes EG1, eine Exklusivverbindung zum Endgerät EG2 aufzubauen, erfolglos, weil schliesslich auch der Knoten K1 innerhalb einer vorgegebenen Zeitspanne keine Bestätigung erhält. In diesem Fall erfolgt eine entsprechende Signalisierung vom Knoten K1 zum Endgerät EG1.

Nach Empfang der Bestätigung vom Knoten K5 schickt der Knoten K3 seinerseits eine Meldung g(p 1,2;K3) an den Knoten K2 zurück. Vom Knoten K4 trifft in gleicher Weise eine Meldung g(p 1,2;K4) im Knoten K2 ein. Der Knoten K2 wartet im Gegensatz zum Knoten K3 das Eintreffen von zwei Bestätigungen ab, bevor er seinerseits eine Bestätigung an den Knoten K1 schicken kann. Nach Erhalt der Bestätigungen von den Knoten K3 und K4 schickt der Knoten K2 eine Bestätigung g(p 1,2;K2) an den Knoten K1 zurück. Somit weiss der Knoten K1, dass die vom Endgerät EG1 abgegebene Anforderung "Privacy" für eine Exklusivverbindung erfolgreich war und das Verbindungsnetz demzufolge in einen Zustand überführt werden kann, in welchem das Endgerät EG1 wie gewünscht nur noch mit dem Endgerät EG2 verbunden ist. Der Knoten K1 setzt nun eine Anforderung/Meldung ok(p 1,2) ab, die an die am Verbindungsnetz beteiligten Knoten gelangt, die demzufolge die betreffenden Endgeräte trennen. So trennt der Knoten K5 aufgrund der bei ihm eingegangenen Meldung ok(p 1,2) die Verbindung zum Endgerät EG6. Das Endgerät EG6 wird dabei in einen Wartezustand versetzt, von dem aus die Verbindung zwischen dem Knoten K5 und dem Endgerät EG6 später wieder aktiviert werden kann. Die Trennung wird dem Endgerät EG6 signalisiert und dort angezeigt. In gleicher Weise erfolgt in den Knoten K1, K2 und K4 die Trennung der Endgeräte EG3, EG4 und EG5 und die Anzeige des Wartezustandes in den Endgeräten, damit die betroffenen wartenden Teilnehmer informiert sind.

Dem Endgerät EG1 wird die erfolgte Trennung der Endgeräte EG3 bis EG6 aufgrund einer im Knoten K1 von den Knoten K2 bis K5 eintreffenden Rückmeldung angezeigt, damit der Teilnehmer am Endgerät EG1 weiss, dass die gewünschte Diskretion gewährleistet ist und er sich entsprechend verhalten kann. Ferner kann vorgesehen werden, dass die Knoten K1 bis K5 den getrennten Endgeräten EG3 bis EG6 das Zustandekommen der vom Endgerät EG1 gewünschten Exklusivverbindung zum Endgerät EG2 melden. Das Bestehen der Exklusivverbindung zwischen den Endgeräten EG1 und EG2 kann dann in den Endgeräten EG3 bis EG6 angezeigt werden.

Für das Eindringen von Anforderungen in das Verbindungsnetz gilt grundsätzlich folgende Regel: Wenn ein Knoten eine Anforderung zum Trennen mithörender/mitsprechender Endgeräte - und zwar unabhängig davon, ob diese Anforderung von einem anderen Knoten oder von einem anderen am Knoten angeschlossenen Endgerät stammt - erhalten hat, weist er spätere Anforderungen für eine Exklusivverbindung von anderen an ihm direkt angeschlossenen Endgeräten ab, solange die erste Anforderung wirksam ist, d.h. die erste Anforderung nicht durch eines der an der Verbindung verbleibenden Endgeräte wieder aufgehoben wird oder beim Warten auf eine Bestätigung das Zeitglied noch nicht abgelaufen ist.

Sobald die Diskretion nicht mehr nötig ist, kann einer der beiden Teilnehmer der Exklusivverbindung (entweder Endgerät EG1 oder EG2) von seinem Endgerat aus eine Meldung "Privacy aufheben" abschicken, welche wiederum zu den Knoten K1 bis K5 gelangt. Dort werden die zuvor vom Verbindungsnetz getrennten Endgeräte EG3 bis EG6 durch die zugehörigen Knoten vom Wartezustand wieder in den Mithör-/Mitsprechzustand versetzt

Statt des Teilnehmers mit dem Endgerät EG1 können selbstverständlich auch die Teilnehmer der Endgeräte EG2 bis EG6 die beschriebene vorübergehende Trennung von mithörenden/mitsprechenden Endgeräten einleiten und so eine Exklusivverbindung zu einem bestimmten anderen Endgerät herstellen, wenn sie die entsprechende Berechtigung haben.

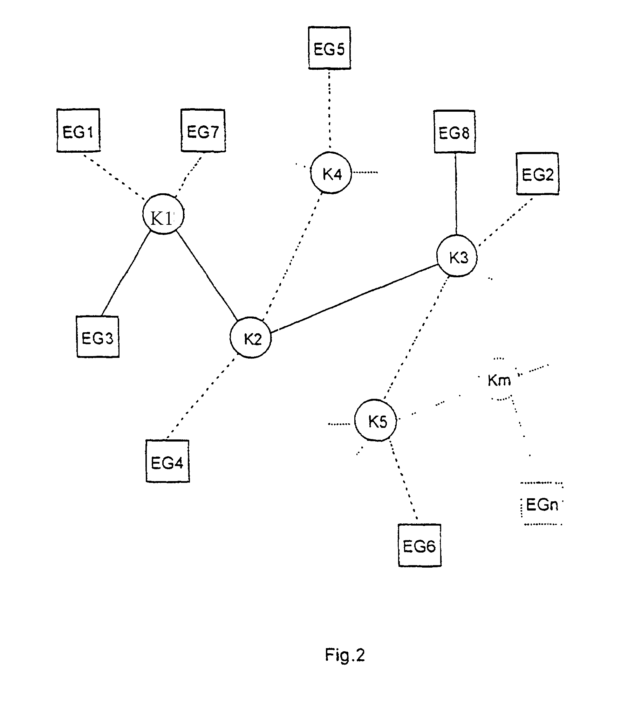

Beim beschriebenen Vorgehen kann der Fall eintreten, dass mehrere an einem Verbindungsnetz beteiligte und unterschiedlichen Knoten angehörende Endgerate nahezu gleichzeitig eine Anforderung für eine Exklusivverbindung absetzen und demzufolge in einem Knoten des Netzwerkes nicht nur eine einzige, sondern kurz nacheinander mehrere sich widersprechende Anforderungen eintreffen. Deshalb entsteht im Knoten das Problem, für welche Anforderung der Knoten sich entscheiden soll. "Kurz nacheinander" heisst: Eine von einem Endgerät abgegebene Anforderung gelangt über den zugehörigen Knoten in das Verbindungsnetz, bevor eine früher von einem anderen Endgerät eines anderen Knotens ausgegangene Anforderung sich in der anhand von Fig 1 beschriebenen Weise bis zum Knoten des erstgenannten Endgerätes ausgebreitet hat Das Verbindungsnetz ist in diesem Zeitpunkt noch nicht auf eine dieser Anforderungen "eingeschwungen", d.h. es hat noch nicht den Zustand erreicht, aus dem eine einer bestimmten Anforderung entsprechende Exklusivverbindung hergestellt werden kann Demzufolge kollidieren unterschiedliche Anforderungen irgendwo im Verbindungsnetz. Die Lösung dieses Konflikts wird nachstehend anhand von Fig.2 beschrieben.

Fig.2 zeigt ein Verbindungsnetz, dessen Struktur dem anhand von Fig.1 beschriebenen Verbindungsnetz entspricht und das durch miteinander verbundene Endgeräte EG1 bis EG8 gebildet wird. Die zusätzlichen Endgeräte EG7 und EG8 sind den Knoten K1 bzw. K3 zugeordnet.

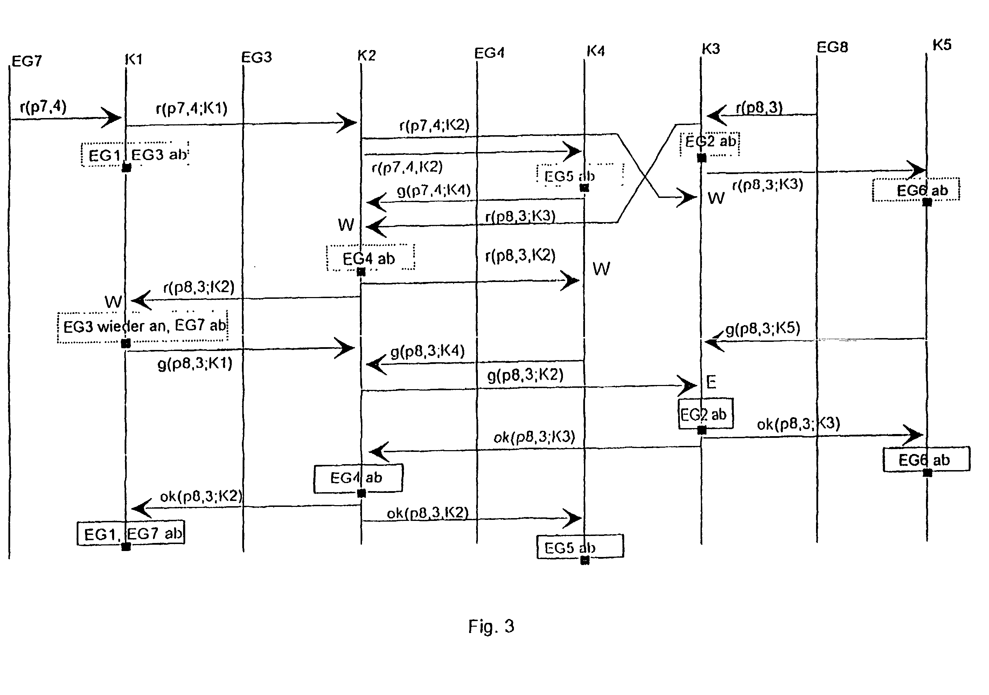

Es wird angenommen, das Endgerät EG7 wolle eine vorübergehende Exklusivverbindung mit dem Endgerät EG4 herstellen und demzufolge die übrigen Endgeräte EG1 bis EG3, EG5, EG6 und EG8 vom Verbindungsnetz trennen. Dies geschieht prinzipiell gleich wie anhand von Fig. 1 beschrieben. Zur besseren Übersichtlichkeit ist der Meldungsfluss separat in Fig.3 in einem Meldungsdiagramm dargestellt. Der zeitliche Ablauf ergibt sich durch Lesen des Diagramms von oben nach unten.
Das Endgerät EG7 schickt eine Anforderung r(p 7,4) an den Knoten K1, der seinerseits eine Anforderung r(p 7,4;K1) an den Knoten K2 schickt. Der Knoten K2 schickt eine Anforderung r(p 7,4;K2) sowohl an den Knoten K3 als auch an den Knoten K4.

Kurz bevor der Knoten K3 die Anforderung r(p 7,4;K2) vom Knoten K2 erhält, trifft im Knoten K3 eine Anforderung r(p 8,3) vom Endgerät EG8 ein, weil dieses Endgerat eine Exklusivverbindung mit dem Endgerät EG3 wünscht. Der Knoten K3 erhält also kurz nacheinander zwei Anforderungen r(p 8,3) und r(p 7,4;K2), die sich widersprechen. Dieser Konflikt muss aufgelöst werden, da gleichzeitig nur eine Exklusivverbindung zwischen zwei Endgeraten unter einer Vielzahl von am Verbindungsnetz beteiligten Endgeräten möglich ist.

Jeder Knoten des Verbindungsnetzes, der in einen solchen Konflikt gerät, muss sich für eine der Anforderungen entscheiden. Eine Möglichkeit besteht darin, dass sich der Knoten aufgrund der Nummer des anfordemden Endgerätes entscheidet, z.B. für das anfordernde Endgerät mit der höheren Nummer. Stattdessen könnte der Entscheid auch zugunsten des anfordernden Endgerätes mit der tieferen Nummer getroffen werden. Ebenso kann als Entscheidungskriterium auch die Nummer des Partner-Endgerätes der gewünschten Exklusivverbindung herangezogen werden. Wesentlich ist, dass sämtliche im Verbindungsnetz auftretenden Konflikte in jedem Knoten nach dem gleichen Kriterium behandelt werden

Im vorliegenden Beispiel entscheide sich der Knoten K3 - wie auch alle anderen Knoten in einem solchen Konfliktfall - für die Anforderung, die vom Endgerät mit der höheren Nummer stammt, d.h. für die Anforderung r(p 8,3). Deshalb ignoriert er die später eintreffende Anforderung r(p 7,4;K2) und behandelt nur die Anforderung r(p 8,3) weiter.

Wenn im Gegensatz zum vorliegenden Beispiel die Anforderung r(p8,3) nach der Anforderung r(p7,4;K2) im Knoten K3 eingetroffen wäre, würde der Knoten K3 jedoch die die oben im Beispiel gemäss Fig.1 erwähnte Regel anwenden, wonach ein Knoten, der bereits eine Anforderung erhalten hat, spätere Anforderungen von direkt an ihm angeschlossenen Endgeräten abweist. Der Knoten K3 würde demzufolge die Anforderung r(p8,3) - wie auch allenfalls weitere Anforderungen von an ihm angeschlossenen Endgeräten - unabhängig von der Nummer des anfordernden Endgerätes abweisen und nur die zuerst eingetroffene Anforderung r(p7,4;K2) weiterbehandeln.

Im vorliegenden Fall, wo der Knoten K3 jedoch die Anforderung r(p,8,3) des Endgerätes EG8 weiterbehandelt, schickt der Knoten K3 dem Knoten K5 eine Anforderung r(p 8,3; K3). Femer schickt der Knoten K3 eine Anforderung r(p 8,3;K3) an den Knoten K2. Der Knoten K2 stellt fest, dass die Anforderung r(p 8,3;K3) im Widerspruch zur früher vom Knoten K1 erhaltenen Anforderung r(p 7,4;K1) steht. Er entscheidet sich ebenfalls für die Anforderung r(p 8,3;K3) des Endgerätes EG8 mit der gegenüber dem Endgerät EG7 höheren Nummer. Dementsprechend schickt der Knoten K2 je eine Anforderung r(p 8,3;K2) an den Knoten K1 und an den Knoten K4 und "vergisst" alles im Zusammenhang mit der früheren Anforderung r(p 7,4;K1).

Der Knoten K4 stellt fest, dass die erhaltene Anforderung r(p 8,3;K2) im Widerspruch zur früheren Anforderung r(p 7,4;K2) steht und entscheidet sich in Anwendung des erwähnten Kriteriums zur Weiterbehandlung der spater eingetroffenen Anforderung r(p 8,3;K2). Die frühere Anforderung r(p 7,4;K2) wird vom Knoten K4 deshalb ebenfalls fallengelassen.

Der Knoten K1 stellt ebenfalls fest, dass die Anforderung r(p 8,3;K2) der früheren Anforderung r(p 7,4) widerspricht und entscheidet sich zur Weiterbehandlung der Anforderung r(p 8,3;K2). Infolgedessen schickt der Knoten K1 eine Bestätigung g(p 8,3;K1) an den Knoten K2, welcher seinerseits eine Bestätigung g(p 8,3;K2) an den Knoten K3 schickt, nachdem er vom Knoten K4 die Bestätigung g(p 8,3;K4) erhalten hat. Die Bestätigung g(p 8,3;K4) ersetzt die bereits früher vom Knoten K4 auf die Anforderung r(p 7,4;K2) an den Knoten K2 abgegebene Bestätigung g(p 7,4;K4). Ferner schickt der Knoten K5 dem Knoten K3 eine Bestätigung g(p 8,3;K5). Damit liegt im Knoten K3 - dem Eintrittsknoten für die Anforderung r(p 8,3) des Endgerätes EG8 - die Bestätigung dafur vor, dass die vom Endgerät EG8 gewünschte vorübergehende Exklusivverbindung mit dem Endgerät EG3 nun hergestellt werden kann. Das Verbindungsnetz hat mit dem Eintreffen der Bestätigungen von den Knoten K2 und K5 im Eintrittsknoten K3 der Anforderung r(p 8,3) einen stabilen Zustand - in Fig.3 mit "E" gekennzeichnet - erreicht, indem sich die vom Endgerät EG8 ausgehende Anforderung im Netz durchgesetzt hat. Die in den Knoten K1 bis K4 aufgetretenen Widersprüche - in Fig.3 mit "W" gekennzeichnet - zwischen den Anforderungen r(p8,3) und r(p7,4) wurden in Anwendung des erwähnten Kritenums jeweils zugunsten der Anforderung r(p8,3) entschieden. Aus diesem Zustand heraus kann nun die gewünschte Exklusivverbindung hergestellt werden.

Hierzu setzt der Knoten K3 eine Meldung ok(p 8,3) an die am Verbindungsnetz beteiligten Knoten K2 und K5 ab, die darauf die betreffenden Endgeräte trennen. So trennt der Knoten K5 aufgrund einer ihm vom Knoten K3 zugegangenen Meldung ok(p 8,3;K3) die Verbindung zum Endgerät EG6. Das Endgerät EG6 wird dabei in einen Wartezustand versetzt, von dem aus die Verbindung zwischen dem Knoten K5 und dem Endgerät EG6 später wieder aktiviert werden kann. Die Trennung wird dem Endgerät EG6 signalisiert und dort angezeigt. In gleicher Weise erhält der Knoten K2 vom Knoten K3 eine Meldung ok(p 8,3;K3) und trennt das Endgerät EG4. Der Knoten K4 erhält vom Knoten K2 die Meldung ok(p 8,3;K2) und trennt das Endgerät EG5. Der Knoten K1 erhält vom Knoten K2 die Meldung ok(p 8,3;K2) und trennt die Endgeräte EG1 und EG7. Das Endgerät EG2 wird durch den Knoten K3 vom Verbindungsnetz getrennt. Damit ist das Endgerät EG8 wie gewünscht exklusiv mit dem Endgerät EG3 verbunden.

Dem Endgerät EG8 kann die erfolgte Trennung der Endgeräte EG1, EG2 und EG4 bis EG7 aufgrund einer im Knoten K3 von den Knoten K1, K2, K4 und K5 eintreffenden Rückmeldung angezeigt werden. Somit weiss der Teilnehmer am Endgerät EG8, dass die gewünschte Diskretion besteht und er kann sich entsprechend verhalten. Ferner kann vorgesehen werden, dass die Knoten K1 bis K5 den getrennten Endgeräten EG1, EG2 und EG4 bis EG7 das Zustandekommen der vom Endgerät EG8 gewünschten Exklusivverbindung zum Endgerät EG3 melden. Das Bestehen der Exklusivverbindung zwischen den Endgeräten EG8 und EG3 kann dann in den Endgeräten EG1, EG2 und EG4 bis EG7 angezeigt werden, damit die betreffenden Teilnehmer über ihren Wartezustand informiert sind.

Sobald die Diskretion nicht mehr nötig ist, kann einer der beiden Teilnehmer von seinem Endgerät EG8 bzw. EG3 aus eine Meldung "Privacy aufheben" abschicken, welche wiederum zu den Knoten K1 bis K5 gelangt Dort werden die zuvor vom Verbindungsnetz getrennten Endgeräte EG1, EG2 und EG4 bis EG7 durch die zugehörigen Knoten vom Wartezustand wieder in den Mithör- /Mitsprechzustand versetzt.

Statt des Teilnehmers mit dem Endgerät EG8 können selbstverständlich auch die Teilnehmer der am Verbindungsnetz beteiligten Endgeräte EG1 bis EG7 die beschriebene vorübergehende Trennung von mithörenden/mitsprechenden Endgeräten einleiten und so eine vorübergehende Exklusivverbindung zu einem anderen Endgerät herstellen, wenn sie die entsprechende Berechtigung haben.

In den bisher beschriebenen Beispielen wurde angenommen, dass die zur Herstellung der gewünschten Exklusivverbindung zwischen zwei Endgeräten notwendige Abschaltung der übrigen Endgeräte erst erfolgt, wenn sich eine Anforderung im Verbindungsnetz durchgesetzt hat und demzufolge die Meldung ok an alle betroffenen Knoten im Netz verteilt worden ist. In einer weiteren Ausführungsform des Verfahrens wird vorgesehen, dass jeder Knoten jeweils schon nach Erhalt einer Anforderung die betreffenden Endgeräte trennt und dann die Anforderung an den/die nächsten Knoten weitergibt. Wenn dann in einem Knoten später eine aufgrund des im Kollisionsfall angewendeten Kriteriums "stärkere" Anforderung eintrifft, trennt der Knoten die entsprechenden Endgeräte und schaltet erforderlichenfalls zuvor getrennte Endgeräte wieder an. In Fig.3 ist dies angedeutet, indem bei den Knoten K1 bis K5 das Ab- bzw. Anschalten von angeschlossenen Endgeräten in punktierten Rahmen angegeben ist. Dabei bedeuten "EG ab" Endgerät trennen und "EG an" bzw. "EG wieder an" Endgerät anschalten. So werden im Knoten K1 zunächst aufgrund der Anforderung r(p 7,4) die Endgeräte EG1 und EG3 getrennt. Aufgrund der sich wie beschrieben im Verbindungsnetz durchsetzenden Anforderung r(p 8,3) wird dann das Endgerät EG3 wieder angeschaltet sowie das Endgerät EG7 getrennt und so die Exklusivverbindung zwischen den Endgeräten EG8 und EG3 hergestellt. Bei dieser Variante des Verfahrens ist das Aussenden einer Meldung ok nach Erreichen des stabilen Zustandes des Verbindungsnetzes nicht erforderlich, was eine Reduktion des Meldungsflusses erlaubt.

Die Anwendung des Verfahrens ist nicht auf das beschriebene Beispiel in einem Femmeldevermittlungsnetzwerk beschränkt. Es ist generell anwendbar in Netzwerken mit Endgeräten, die über das Netzwerk miteinander verbindbar sind und von denen alle bis auf zwei vorübergehend abgeschaltet und dann wieder zugeschaltet werden müssen. Denkbar ist insbesondere eine Anwendung in einem Rechnemetzwerk, wo zur Übertragung von Daten zwischen zwei bestimmten Rechnern alle Verbindungen zu anderen Rechnern vorübergehend unterbrochen werden müssen, um eine ungestörte und schnelle Übertragung zu ermöglichen.

## Patentansprüche

1. Verfahren zum Betrieb eines Netzwerkes mit Endgeräten (EG1, ..., EGm), die über Vermittlungsknoten (K1, ..., Km) des Netzwerkes miteinander verbindbar sind, wobei bei Bestehen einer Verbindung zwischen zwei Endgeräten andere Endgeräte, die entsprechend berechtigt sind, in diese Verbindung eintreten können, **dadurch gekennzeichnet, dass** ein vorübergehendes Trennen von Endgeräten aus dieser Verbindung mit folgenden Verfahrensschritten erfolgt:
(A) Wenn ein erstes Endgerät (EG1) der an der Verbindung beteiligten Endgeräte (EG1 bis EG6) die Verbindung nur mit einem zweiten Endgerät (EG2) aufrechterhalten und die anderen Endgeräte (EG3 bis EG6) von der Verbindung vorübergehend trennen will, wird von diesem ersten Endgerät (EG1) eine erste Anforderung ( r(p1,2) ) ausgesendet,
(B) die erste Anforderung ( r(p1,2) ) wird an alle Vermittlungsknoten (K1 ... K5) übermittelt, die an dem durch die Endgeräte (EG1 bis EG6) gebildeten Verbindungsnetz beteiligt sind, wobei ein Vermittlungsknoten (K1, ..., Km), der eine erste Anforderung ( r(p1,2;K1) ) erhalten hat, weitere Anforderungen von ihm zugeordneten Endgeräten abweist, solange die erste Anforderung wirksam ist,
(C) jeder Vermittlungsknoten des Verbindungsnetzes schickt nach Erhalt der Anforderung ( r(p1,2;K1) ) eine entsprechende Bestätigung ( g(p1,2;K2) ) an den Vermittlungsknoten (K1) zurück, von dem er die Anforderung erhalten hat, wobei ein Verrnittlungsknoten (K2) erst dann eine Bestätigung an den Vermittlungsknoten (K1) zurückschickt, von dem er die Anforderung ( r(p1,2;K1) ) erhalten hat, wenn er von allen Vermittlungsknoten (K4, K3) eine Bestätigung (g(p1,2;K2), g(p1,2;K3), g(p1,2;K4)) erhalten hat, denen er eine Anforderung ( r(p1,2;K1) ) geschickt hat,
(D) bei Eintreffen der Bestätigung ( g(p1,2;K2) ) im Vermittlungsknoten (K1), dem das die erste Anforderung ( r(p1,2) ) aussendende Endgerät (EG1) zugeordnet ist, schickt dieser Vermittlungsknoten (K1) eine weitere Anforderung zum Trennen der betreffenden Endgeräte (EG3 bis EG6) an die anderen Vermittlungsknoten (K2 bis K5),
(E) dass hierauf die den zu trennenden Endgeräten (EG3 bis EG6) zugeordneten Vermittlungsknoten (K1, K2, K4, K5) diese Endgeräte vom Verbindungsnetz vorübergehend trennen.

2. Verfahren zum Betrieb eines Netzwerkes mit Endgeräten (EG1, ..., EGm), die über Vermittlungsknoten (K1, ..., Km) des Netzwerkes miteinander verbindbar sind, wobei bei Bestehen einer Verbindung zwischen zwei Endgeräten andere Endgeräte, die entsprechend berechtigt sind, in diese Verbindung eintreten können, **dadurch gekennzeichnet, dass** ein vorübergehendes Trennen von Endgeräten aus dieser Verbindung mit folgenden Verfahrensschritten erfolgt:
(A) Wenn ein erstes Endgerät (EG1) der an der Verbindung beteiligten Endgeräte (EG1 bis EG6) die Verbindung nur mit einem zweiten Endgerät (EG2) aufrechterhalten und die anderen Endgeräte (EG3 bis EG6) von der Verbindung vorübergehend trennen will, wird von diesem ersten Endgerät (EG1) eine erste Anforderung ( r(p1,2) ) ausgesendet,
(B) die erste Anforderung ( r(p1,2) ) wird an alle Vermittlungsknoten (K1 ... K5) übermittelt, die an dem durch die Endgeräte (EG1 bis EG6) gebildeten Verbindungsnetz beteiligt sind, wobei ein Vermittlungsknoten (K1, ..., Km), der eine erste Anforderung ( r(p1,2;K1) ) erhalten hat, weitere Anforderungen von ihm zugeordneten Endgeräten abweist, solange die erste Anforderung wirksam ist,
(C) jeder Vermittlungsknoten des Verbindungsnetzes trennt nach Erhalt der Anforderung die betreffenden Endgeräte (EG1 bis EG6) vorübergehend von der Verbindung und schickt ( r(p1,2;K1) ) eine entsprechende Bestätigung ( g(p1,2;K2) ) an den Vermittlungsknoten (K1) zurück, von dem er die Anforderung erhalten hat, wobei ein Vermittlungsknoten (K2) erst dann eine Bestätigung an den Vermittlungsknoten (K1) zurückschickt, von dem er die Anforderung ( r(p1,2;K1) ) erhalten hat, wenn er von allen Vermittlungsknoten (K4, K3) eine Bestätigung (g(p1,2;K2), g(p1,2;K3), g(p1,2;K4)) erhalten hat, denen er eine Anforderung ( r(p1,2;K1) ) geschickt hat.

3. Verfahren nach Anspruch 1 oder 2, **dadurch gekennzeichnet, dass** wenn in einem Vermittlungsknoten kurz nacheinander mehrere sich widersprechende Anforderungen eintreffen, der Vermittlungsknoten nur eine dieser Anforderungen nach einem im ganzen Verbindungsnetz gleichen Kriterium weiterbehandelt und die anderen Anforderungen ignoriert.

4. Verfahren nach Anspruch 3, **dadurch gekennzeichnet, dass** als Kriterium die Nummer des anfordernden Endgerätes (EG1) oder die Nummer des Partner- Endgerätes (EG2) verwendet wird.

5. Verfahren nach Anspruch 3 oder 4, **dadurch gekennzeichnet, dass** vorübergehend aus einer Verbindung getrennte Endgeräte (EG3 bis EG6) in einen Wartezustand versetzt werden, aus dem sie durch eines der beiden in der Verbindung verbliebenen Endgeräte (EG1, EG2) durch Aussenden einer entsprechenden Meldung an die zugehörigen Knoten wieder an das Verbindungsnetz anschaltbar sind.

6. Verfahren nach einem der vorangehenden Ansprüche, **dadurch gekennzeichnet, dass** dem die vorübergehende Trennung einleitenden Endgerät (EG1) die Trennung der gewünschten Endgeräte (EG3 bis EG6) signalisiert wird, sobald die Trennung vollzogen worden ist.

7. Verfahren nach einem der vorangehenden Ansprüche, **dadurch gekennzeichnet, dass** den vorübergehend getrennten Endgeräten (EG3 bis EG6) die Trennung signalisiert wird, sobald die Trennung vollzogen ist

8. Verfahren nach einem der vorangehenden Ansprüche, **dadurch gekennzeichnet, dass** ein Vermittlungsknoten die Bestätigung nur dann an den Vermittlungsknoten zurückschickt, von dem er die Anforderung erhalten hat, wenn er innerhalb einer vorgegebenen Zeitspanne von allen Vermittlungsknoten eine Bestätigung erhalten hat, denen er eine Anforderung geschickt hat.

## Claims

1. Method for operating a network having terminals (EG1,..., EGm), which can be connected to one another via switching nodes (K1,...,Km) in the network, in which case, when a connection exists between two terminals, other terminals which are appropriately authorized can join this connection, **characterized in that** terminals are temporarily disconnected from this connection by means of the following method steps:
(A) when a first terminal (EG1) of the terminals (EG1 to EG6) which are involved in the connection wishes to maintain the connection to only one second terminal (EG2) or wishes to temporarily disconnect the other terminals (EG3 to EG6) from the connection, this first terminal (EG1) transmits a first request (r(p1, 2)).
(B) the first request (r(p1, 2)) is transmitted to all the switching nodes (K1...K5) which are involved in the connection network formed by the terminals (EG1 to EG6), in which case one switching node (K1, ..., Km), which has received a first request (r(p1,2;K1)), rejects further requests from terminals associated with it for as long as the first request is active,
(C) after receiving the request (r(p1,2;K1)), each switching node in the connection network sends, a corresponding confirmation (g(p1,2;K2)) to that switching node (K1) from which it received the request, in which case a switching node (K2) sends back a confirmation to the switching node (K1) from which it received the request (r(p1,2;K1)) only when it has received a confirmation (g(p1,2;K2) g(p1,2;K3), g(p1,2;K4)) from all switching nodes (K4, K3) to which it sent a request (r(p1,2;K1))
(D) when the confirmation (g(p1,2;K2)) arrives in the switching node (K1) with which the terminal (EG1) which transmitted the first request (r(p1, 2)), this switching node (K1) sends a further request for disconnection of the relevant terminals (EG3 to EG6) to the other switching nodes (K2 to K5),
(E) in that, in response to this, the switching nodes (K1, K2, K4, K5) associated with the terminals (EG3 to EG6) to be disconnected temporarily disconnects these terminals from the connection network.

2. Method for operating a network having terminals (EG1,..., EGm), which can be connected to one another via switching nodes (K1,...,Km) in the network, in which case, when a connection exists between two terminals, other terminals which are appropriately authorized can join this connection, **characterized in that** terminals are temporarily disconnected from this connection by means of the following method steps:
(A) when a first terminal (EG1) of the terminals (EG1 to EG6) which are involved in the connection wishes to maintain the connection to only one second terminal (EG2) or wishes to temporarily disconnect the other terminals (EG3 to EG6) from the connection, this first terminal (EG1) transmits a first request (r(p1, 2)).
(B) the first request (r(p1, 2)) is transmitted to all the switching nodes (K1...K5) which are involved in the connection network formed by the terminals (EG1 to EG6), in which case one switching node (K1,..., Km), which has received a first request (r(p1,2;K1)), rejects further requests from terminals associated with it for as long as the first request is active,
(C). after receiving the request each switching node in the connection network temporarily disconnects the relevant terminals (EG1 to EG6) from the connection and sends (r (p1,2;K1)) a corresponding confirmation (g(p1,2;K2)) back to the switching node (K1) from which it received the request, in which case a switching node (K2) sends back a confirmation to the switching node (K1) from which it received the request (r(p1,2;K1)) only when it has received a confirmation (g(p1,2;K2) g(p1,2;K3), g(p1,2;K4)) from all switching nodes (K4, K3) to which it sent a request (r(p1,2;K1)).

3. Method according to Claim 1 or 2, **characterized in that**, if a number of contradictory requests arrive at a switching node shortly one after the other, the switching node continues to process only one of these requests, on the basis of a criterion which is the same throughout the entire connection network, and ignores the other requests.

4. Method according to Claim 3, characterized in that the number of the requesting terminal (EG1) or the number of the partner terminal (EG2) is used as the criterion.

5. Method according to Claim 3 or 4, **characterized in that** terminals (EG3 to EG6) which are temporarily disconnected from the connection are changed to a waiting state, from which they can be connected to the connection network once again by one of the two terminals (EG1, EG2) which remain in the connection transmitting an appropriate message to the associated nodes.

6. Method according to one of the preceding claims, **characterized in that** the disconnection of the desired terminals (EG3 to EG6) is signalled to the terminal (EG1) initiating the temporary disconnection, as soon as the disconnection process has been completed.

7. Method according to one of the preceding claims, **characterized in that** the disconnection is signalled to the terminals (EG3 to EG6) which have been temporarily disconnected as soon as the disconnection process is complete.

8. Method according to one of the preceding claims, **characterized in that** a switching node sends back the confirmation to the switching node from which it received the request only if it has received confirmation within a predetermined time interval from all the switching nodes to which it sent a request.

## Revendications

1. Procédé pour faire fonctionner un réseau comportant des terminaux (EG1, ..., EGm) qui sont reliés les uns aux autres par l'intermédiaire de noeuds (K1, ..., Km) de commutation du réseau, dans lequel, en cas d'existence d'une communication entre deux terminaux, d'autres terminaux, qui y sont autorisés en conséquence, peuvent entrer dans cette communication, caractérisé en ce que les terminaux sont provisoirement séparés de cette communication par les étapes opératoires suivantes :
(A) si un premier terminal (EG1) des terminaux (EG1 à EG6) participant à la communication ne veut maintenir la communication qu'avec un deuxième terminal (EG2) et séparer provisoirement les autres terminaux (EG3 à EG6) de la communication, il est émis par ce premier terminal (EG1) une première demande (r(p 1,2)),
(B) la première demande (r(p 1,2)) est transmise à tous les noeuds (K1, ..., K5) de commutation qui participent au réseau de communication formé par les terminaux (EG1 à EG6), un noeud (K1, ..., Km) de communication qui a reçu une première demande (r(p 1,2 ; K1)) refusant des demandes ultérieures de terminaux qui lui sont associés tant que la première demande est efficace,
(C) chaque noeud de commutation du réseau de communication renvoie après réception de la demande (r(p 1,2 ; K1)) une confirmation (g(p 1,2 ; K2)) correspondante au noeud (K1) de commutation dont il a reçu la demande, un noeud (K2) de commutation ne renvoyant une confirmation au noeud (K1) de commutation dont il a reçu la demande (r(p 1,2 ; K1)) que s'il a reçu une confirmation (g(p 1,2 ; K2)), (g(p 1,2 ; K3)), (g(p 1,2 ; K4)) de tous les noeuds (K4, K3) de commutation auxquels une demande (r(p 1,2 ; K1)) a été envoyée,
(D) à l'arrivée de la confirmation (g(p 1,2 ; K2)) dans le noeud (K1) de commutation auquel est associé le terminal (EG1) émettant la première demande (r(p 1,2)), ce noeud (K1) de commutation envoie une demande supplémentaire de séparation des terminaux (EG3 à EG6) concernés à destination des autres noeuds (K2 à K5) de commutation,
(E) après quoi les noeuds (K1, K2, K4, K5) de commutation associés aux terminaux (EG3 à EG6) à séparer séparent provisoirement ces terminaux du réseau de communication.

2. Procédé pour faire fonctionner un réseau comportant des terminaux (EG1, ..., EGm) qui sont reliés les aux autres par l'intermédiaire de noeuds (K1, ..., Km) de commutation du réseau, dans lequel, en cas d'existence d'une communication entre deux terminaux, d'autres terminaux, qui y sont autorisés en conséquence, peuvent entrer dans cette communication, caractérisé en ce que les terminaux sont provisoirement séparés de cette communication par les étapes opératoires suivantes :
(A) si un premier terminal (EG1) des terminaux (EG1 à EG6) participant à la communication ne veut maintenir la communication qu'avec un deuxième terminal (EG2) et séparer provisoirement les autres terminaux (EG3 à EG6) de la communication, un premier message (r(p 1,2) est émis par ce premier terminal (EG1),
(B) la première demande (r(p 1,2)) est transmise à tous les noeuds (K1, ..., K5) de commutation qui participent au réseau de communication formé par les terminaux (EG1 à EG6), un noeud (K1, ..., Km) de communication qui a reçu une première demande (r(p 1,2 ; K1)) refusant des demandes ultérieures de terminaux qui lui sont associés tant que la première demande est efficace,
(C) chaque noeud de commutation du réseau de communication sépare après réception de la demande les terminaux (EG1 à EG6) concernés provisoirement de la communication et renvoie (r(p 1,2 ; K1)) une confirmation (g(p 1,2 ; K2)) correspondante au noeud (K1) de commutation dont il a reçu la demande, un noeud (K2) de commutation ne renvoyant une confirmation au noeud (K1) de commutation dont il a reçu la demande (r(p 1,2 ; K1) que s'il a reçu une confirmation (g(p 1,2 ; K2), (g(p 1,2 ; K3), (g(p 1,2 ; K4) de tous les noeuds (K4, K3) de commutation auxquels il a envoyé une demande (r(p 1,2 ; K1).

3. Procédé suivant la revendication 1 ou 2, caractérisé en ce que s'il arrive dans un noeud de commutation à brève échéance l'une après l'autre plusieurs demandes qui se contredisent, le noeud de commutation ne continue de traiter que l'une de ces demandes suivant un critère qui est le même dans tout le réseau de communication et ne tient pas compte des autres demandes.

4. Procédé suivant la revendication 3, caractérisé en ce que l'on utilise comme critère le numéro du terminal (EG1) qui demande ou le numéro du terminal (EG2) partenaire.

5. Procédé suivant la revendication 3 ou 4, caractérisé en ce que des terminaux (EG3 à EG6) provisoirement séparés d'une communication sont mis en un état d'attente à partir duquel ils peuvent être raccordés à nouveau au réseau de communication par l'un des deux terminaux (EG1, EG2) restant clans la communication, par émission d'un message correspondant à destination des noeuds associés.

6. Procédé suivant l'une des revendications précédentes, caractérisé en ce qu'il est signalé au terminal (EG1) initiant la séparation provisoire la séparation des terminaux (EG3 à EG6) souhaitée dès que la séparation a été accomplie.

7. Procédé suivant l'une des revendications précédentes, caractérisé en ce qu'il est signalé aux terminaux (EG3 à EG6) provisoirement séparés la séparation dès que la séparation est accomplie.

8. Procédé suivant l'une des revendications précédentes, caractérisé en ce qu'un noeud de commutation ne renvoie la confirmation au noeud de commutation dont il a reçu la demande que s'il a reçu en l'espace d'un laps de temps prescrit une confirmation de tous les noeuds de commutation auxquels il a envoyé une demande.
